Europäisches Patentamt

European Patent Office

Office européen des brevets

(11) Veröffentlichungsnummer: **0 038 015**
**B1**

(12) **EUROPÄISCHE PATENTSCHRIFT**

(45) Veröffentlichungstag der Patentschrift:
25.05.83

(21) Anmeldenummer: 81102625.1

(22) Anmeldetag: 08.04.81

(51) Int. Cl.³: **F 25 D 23/08, E 06 B 7/23**

(54) **Kühl- oder Gefriergerät.**

(30) Priorität: 16.04.80 DE 3014585

(43) Veröffentlichungstag der Anmeldung:
21.10.81 Patentblatt 81/42

(45) Bekanntmachung des Hinweises auf die Patenterteilung:
25.05.83 Patentblatt 83/21

(84) Benannte Vertragsstaaten:
CH FR GB IT LI NL SE

(56) Entgegenhaltungen:
DE-A-1 509 553
DE-A-1 922 789
DE-C-927 895
FR-A-1 474 659
FR-A-2 429 316
US-A-3 382 618
US-A-3 408 772
US-A-3 466 804
US-A-3 942 853
US-A-4 015 368

(73) Patentinhaber: Licentia Patent-Verwaltungs-GmbH,
Theodor-Stern-Kai 1, D-6000 Frankfurt/Main 70 (DE)

(72) Erfinder: Kerpers, Werner, Ing.-grad., Im Hungerborn
Nr. 24, D-6530 Bingen/Rhein (DE)

(74) Vertreter: Vogl, Leo, Dipl.-Ing., Theodor-Stern-Kai 1,
D-6000 Frankfurt/Main 70 (DE)

BUNDESDRUCKEREI BERLIN

# Kühl- oder Gefriergerät

Die Erfindung betrifft ein Kühl- oder Gefriergerät gemäß dem Oberbegriff des ersten Anspruchs.

Bei einem bekannten Kühl- oder Gefriergerät dieser Art (DE-U-1 740 442) sind die Profilleisten im Querschnitt U-förmig ausgebildet, wobei deren Joche auf den Stirnflächen der Türen befestigt sind und bei geschlossenen Türen die paarweise gegenüberliegenden Schenkel seitlich dichtend aneinanderstoßen. Abgesehen davon, daß die geschlossenen Türen eine exakte Lage einnehmen und die Profilstreifen in Umfangsrichtung mit hoher Genauigkeit in gegenseitiger Zuordnung fixiert werden müssen, um einen Luftdurchtritt durch den allein den Spalt isolierenden, zwischen den Schenkeln gebildeten Raum zu verwenden, muß beim gegenseitigen Verschwenken der Türen in jedem Fall der innere Schenkel der einen Profilleiste unter elastischer Verformung über den äußeren Schenkel der anderen Profilleiste gezogen werden. Der hierfür erforderliche Kraftaufwand macht es erforderlich, daß die Türen beim Schließen von Hand bis in ihre endgültige Dichtungslage gedrückt werden, weil die ansonsten für das selbsttätige Schließen ausreichende Kraft einer an den weiteren Rändern der Türen angeordneten Magnetdichtung diesen Widerstand nicht überwinden kann.

Der Erfindung liegt die Aufgabe zugrunde, bei einem gemäß dem Oberbegriff des ersten Anspruchs ausgebildeten Kühl- oder Gefriergerät Maßnahmen zu treffen, durch die bei geringer Spaltbreite eine Trennung von Dichtungsräumen im Dichtungsprofil und eine Gleitreibung zwischen den Profilstreifen vermieden wird.

Die Lösung dieser Aufgabe erfolgt gemäß der Erfindung durch die kennzeichnenden Merkmale des ersten Anspruchs.

Bei der erfindungsgemäßen Ausgestaltung kommen zwei geschlossene Dichtungsteilprofile in der Verstellrichtung einer Tür hintereinander zu liegen, so daß der Spalt zwischen den Türen mit thermisch isolierenden Elementen ausgefüllt ist. Dabei bildet auch der Luftspalt zwischen der Stirnfläche der einen Tür und der benachbarten Fläche der an der anderen Stirnseite angebrachten Profilleiste aufgrund seiner sehr geringeren, eine konvektive Luftströmung unterbindenden Weite eine thermische Isolierstrecke und verhindert zusätzlich eine Gleitreibung zwischen diesen sich gegenüberstehenden Flächen, insbesondere in der Schließlage der Türen. Die Kraft der an weiteren Türkanten angebrachten Magnetdichtungen steht daher unvermindert für das vollkommene Anlegen der Türen an den Gehäuserahmen zur Verfügung. Der lediglich auf seitliches Verbiegen beanspruchte Lippendichtungsstreifen zwischen den Kammern der Profilleisten sorgt dabei für eine Unterbrechung des Luftspaltes in Längsrichtung.

Vorteilhafte Ausgestaltungen der Erfindung sind den Merkmalen der weiteren Ansprüche zu entnehmen.

Die Erfindung ist nachfolgend an Hand der Zeichnungen eines Ausführungsbeispiels näher erläutert.

Es zeigt

Fig. 1 in perspektivischer Teilansicht eine Anordnung einer Dichtung im Spalt zwischen den Stirnflächen von benachbarten Türen eines Kühl- oder Gefriergerätes und

Fig. 2 einen Querschnitt durch die Dichtungsanordnung in einem mittleren Abschnitt der teilweise dargestellten Türen.

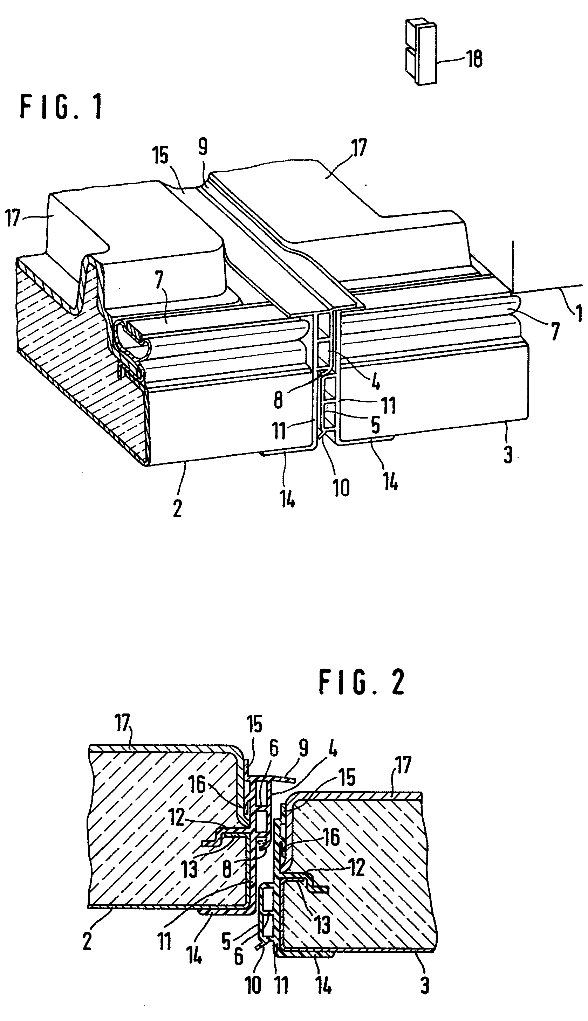

An einem bei 1 angedeuteten Gehäuse eines Kühl- oder Gefriergerätes sind zwei Türen 2 und 3 schwenkbar angelenkt, wobei die Scharniere an voneinander abgewandten Kanten der Türen 2, 3 angeordnet sind. Zwischen den aufeinander zuweisenden Stirnflächen der Türen 2, 3 ist ein Spalt vorgesehen, in dem eine Dichtung angeordnet ist. Die Dichtung besteht aus zwei Profilleisten 4 und 5, von welchen je eine auf einer Stirnfläche angeordnet ist und die in Längsrichtung der Stirnflächen der Türen 2, 3 parallel nebeneinander verlaufen sowie durch wenigstens einen in Längsrichtung verlaufenden Trennsteg 6 in geschlossene Kammern unterteilt sind. Die Höhe der Profilleisten 4, 5 ist um ca. 1 mm kleiner als die freie Breite des Spaltes zwischen den Stirnflächen der Türen 2, 3, wodurch beim Bewegen der einen Tür 3 gegenüber der Tür 2 keine Gleitreibung zwischen den Profilleisten 4, 5 und den jeweils gegenüberliegenden Teilen der Stirnflächen entstehen kann. Die von an anderen Kanten der Türen 2, 3 vorgesehenen Magnetdichtungen 7 bei geschlossenen Türen 2, 3 gegenüber dem Gehäuse 1 erzeugten Anziehungskräfte werden daher durch die Profilleisten 4, 5 nicht beeinträchtigt. An der der inneren Profilleiste 4 benachbarten Längsseite der äußeren Profilleiste 5 ist ein sich über die gesamte Länge erstreckender Lippendichtungsstreifen 8 vorgesehen, der bei geschlossenen Türen 2, 3 an der benachbarten Längsseite des inneren Profilstreifens 4 unter mechanischer Vorspannung anliegt. Bei geöffneter Tür 3 wandert der Lippendichtungsstreifen 8 gemäß Fig. 2 aus der gestrichelt dargestellten in die voll ausgezeichnete Lage auf Grund innerer mechanischer Spannung. Hierdurch ist sichergestellt, daß auch bei nicht vollkommen zueinander ausgerichteten geschlossenen Türen 2, 3 ein Luftdurchtritt durch den engen Spalt zwischen den freien Stirnflächen der Türen 2, 3 und den eng benachbarten Rücken der Profilstreifen 4, 5 unterbunden ist. Weiter ist sowohl an der der Türinnenseite benachbarten Profilleiste 4 als auch an der der Türaußenseite benachbarten Profilleiste 5 je eine Dichtungslasche 9 bzw. 10 angeordnet, die den Spalt zur benachbarten Tür 3 bzw. 4 hin übergreift.

Dadurch sind die Luftspalte zwischen den freien Teilen der Längsseiten der Türen 2, 3 und den jeweils gegenüberstehenden Rücken der Profilleisten 5, 4 verschlossen, so daß der darin eingeschlossene Raum eine thermische Isolation bildet, nachdem sich wegen der geringen Weite des Luftspaltes darin keine Konvektionsströmung ausbilden kann. Bei einer Betauung kann daher nur die vernachlässigbare, in dem geringen Luftvolumen des Luftspaltes enthaltende Feuchtigkeit niedergeschlagen werden; ein Abtropfen von Kondenswasser tritt dabei nicht auf. Durch die gewählte Anordnung der Dichtungslaschen 9, 10 ist erreicht, daß beim Verstellen der Tür 3 wie bei dem Lippendichtstreifen 8 nur eine seitliche Ausbiegung, jedoch keine reibungsbehaftete Bewegung auftritt.

Die Profilleisten 4 und 5 sind jeweils auf einem Träger 11 angeordnet, der die Stirnflächen der Türen 2, 3 übergreift. Der Träger 11 besteht aus formstabilem Werkstoff (Hart-PVC) und die Profilleisten aus weichelastisch verformbarem Werkstoff (Weich-PVC), die vorzugsweise in einem Fertigungsvorgang einstückig hergestellt sind. Der Träger 11 weist einen senkrecht zur Stirnfläche stehenden Haltesteg 12 auf, der auf dem inneren, gegenüber der Stirnfläche ebenfalls senkrecht abgewinkelten Rand 13 der aus Blech hergestellten Außenschale der Türen 2 bzw. 3 aufliegt. Außerdem ist das freie Ende des Haltesteges 12 zusätzlich abgewinkelt und hintergreift formschlüssig die freie Kante des Randes 13, wobei der Rand der Innenschale der Türen 2, 3 jeweils auf dem Haltesteg 12 dicht aufliegt. Hierdurch ist eine genaue Lagefixierung an den Türen sichergestellt, die durch eine an jeden Träger 11 angeformte, auf die zugehörige Türaußenkante greifende und dort befestigte Abdeckleiste 14 noch unterstützt wird.

An dem der Innenseite zugewandten Ende der Träger 11 befindet sich jeweils eine elastische Dichtungslippe 15, die mit mechanischer Vorspannung an der Kontur der benachbarten Türinnenkante aufliegt und das Eindringen von Feuchtigkeit hinter die Träger 11 verhindert. Zwischen dem Haltesteg 12 und der Dichtungslippe 15 kann an der Hinterseite des Trägers 11 noch eine Abdichtlippe 16 vorgesehen werden, die sich an Jer Innenschale 17 der Tür 2, 3 abstützt und das Austreten von Isolierschaum unterbindet.

Im übrigen braucht der Spalt lediglich eine Breite entsprechend der Höhe nur einer Profilleiste aufzuweisen und es erstrecken sich die Profilleisten 4, 5 je über annähernd die halbe Tiefe des Spaltes zwischen den Türen 2, 3, wodurch eine optimale Abdichtung gegen Kälteverluste sichergestellt ist. Zusätzlich werden dabei die offenen Enden der Profilleisten 4, 5 mit je einem Stopfen 18 verschlossen, um darin eine Konvektionsströmung zu unterbinden.

## Patentansprüche

1. Kühl- oder Gefriergerät mit wenigstens zwei benachbarten Türen (2, 3) und einer im Spalt zwischen den einander zugewandten Stirnflächen der Türen angeordneten Dichtung, die aus je einer mit einer Stirnfläche verbundenen Profilleiste (4, 5) besteht und bei der die Profilleisten in gegenseitige dichtende Anlage bringbar sind, dadurch gekennzeichnet, daß die Profilleisten (4, 5) in Längsrichtung nebeneinander angeordnet sind und wenigstens eine in Längsrichtung der Stirnflächen verlaufende Kammer aufweisen, deren Höhe kleiner als die Breite des Spaltes ist, und daß zwischen den einander benachbarten Längsseiten der Profilleisten (4, 5) ein Lippendichtstreifen (8) vorgesehen ist.

2. Kühl- oder Gefriergerät nach Anspruch 1, dadurch gekennzeichnet, daß an der der Türinnenseite benachbarten Profilleiste (4) eine Dichtungslasche (9) angebracht ist, die den Spalt zwischen den Türen (2, 3) übergreift.

3. Kühl- oder Gefriergerät nach Anspruch 1 oder 2, dadurch gekennzeichnet, daß die Profilleisten (4, 5) einen jeweils die Stirnfläche übergreifenden Träger (11) aus formstabilem Werkstoff aufweisen, auf dem die Profilleisten aus elastisch verformbarem Werkstoff aufgebracht ist.

4. Kühl- oder Gefriergerät nach Anspruch 3, dadurch gekennzeichnet, daß der Träger (11) und die Profilleiste (4, 5) einstückig miteinander verbunden sind.

5. Kühl- oder Gefriergerät nach Anspruch 1 oder einem der folgenden, dadurch gekennzeichnet, daß die Profilleistenkammern (4, 5) sich je über annähernd die halbe Tiefe des Spaltes erstrecken.

6. Kühl- oder Gefriergerät nach Anspruch 1 oder einem der folgenden, dadurch gekennzeichnet, daß die Profilleiste (4, 5) durch wenigstens einen Trennsteg (6) unterteilt ist.

7. Kühl- oder Gefriergerät nach Anspruch 3 oder einem der folgenden, dadurch gekennzeichnet, daß der Träger (11) einen Haltesteg (12) aufweist, der auf dem inneren, gegenüber der Stirnfläche senkrecht abgewinkelten Rand (13) der Außenschale der Tür (2, 3) aufliegt.

8. Kühl- oder Gefriergerät nach Anspruch 7, dadurch gekennzeichnet, daß das freie Ende des Haltesteges (12) angewinkelt ist und die freie Kante des Randes (13) formschlüssig hintergreift.

9. Kühl- oder Gefriergerät nach Anspruch 1 oder einem der folgenden, dadurch gekennzeichnet, daß die freien Enden der Profilleistenkammern mit einem dem Querschnitt der Kammern angepaßten Stopfen (18) verschlossen sind.

10. Kühl- oder Gefriergerät nach Anspruch 3;

oder einem der folgenden, dadurch gekennzeichnet, daß an den Träger (11) eine auf der zugehörigen Türinnenkante mit mechanischer Vorspannung aufliegende elastische Dichtungslippe (15) angeformt ist.

11. Kühl- oder Gefriergerät nach Anspruch 3 oder einem der folgenden, dadurch gekennzeichnet, daß an den Trägern (11) eine auf die zugehörige Türaußenkante greifende Abdeckleiste (14) angeformt ist.

12. Kühl- oder Gefriergerät nach Anspruch 1 oder einem der folgenden, dadurch gekennzeichnet, daß der Lippendichtungsstreifen (8) an der Längsseite der einen Profilleiste (4) angeordnet ist.

13. Kühl- oder Gefriergerät nach Anspruch 1 oder einem der folgenden, dadurch gekennzeichnet, daß an der der Türaußenseite benachbarten Längsseite der außen angeordneten Profilleisten (5) eine den Spalt zwischen den Türen (2, 3) übergreifende Dichtungslippe (10) angeordnet ist.

## Claims

1. Refrigerating or freezing appliance with at least two neighbouring doors (2, 3) and a seal, which is arranged in the gap between the mutually facing end faces of the doors and consists of a profile strip (4, 5) each connected with a respective end face and in which the profile strips are bringable into mutually sealing contact, characterised thereby, that the profile strips (4, 5) are arranged each beside the other in longitudinal direction and display at least one chamber, which extends in longitudinal direction of the end faces and the height of which is smaller than the width of the gap, and that a lip seal strip (8) is provided between the mutually neighbouring longitudinal sides of the profile strips (4, 5).

2. Refrigerating or freezing appliance according to claim 1, characterised thereby, that a sealing strap (9), which overlaps the gap between the doors (2, 3), is mounted at the profile strip (4) neighbouring the inside of the door.

3. Refrigerating or freezing appliance according to claim 1 or 2, characterised thereby, that the profile strips (4, 5) each display a carrier (11), which overlaps the respective end face, is of a material of stable shape and on which the profile strip of elastically deformable material is mounted.

4. Refrigerating or freezing appliance according to claim 3, characterised thereby, that the carrier (11) and the profile strip (4, 5) are integrally connected each with the other.

5. Refrigerating or freezing appliance according to claim 1 or one of the following ones, characterised thereby, that the profile strip chambers (4, 5) each extend over approximately half the depth of the gap.

6. Refrigerating or freezing appliance according to claim 1 or one of the following ones, characterised thereby, that the profile strip (4, 5) is subdivided by at least one separating web (6).

7. Refrigerating or freezing appliance according to claim 3 or one of the following ones, characterised thereby, that the carrier (11) displays a retaining web (12), which rests on the inner rim (13), bent over perpendicularly relative to the end face, of the outer shell of the door (2, 3).

8. Refrigerating or freezing appliance according to claim 7, characterised thereby, that the free end of the retaining web (12) is bent over and shape-lockingly engages behind the free edge of the rim (13).

9. Refrigerating or freezing appliance according to claim 1 or one of the following ones, characterised thereby, that the ends of the profile strip chambers are closed off by a plug (18) adapted to the cross-section of the chambers.

10. Refrigerating or freezing appliance according to claim 3 or one of the following ones, characterised thereby, that an elastic sealing lip (15), resting under mechanical bias on the inside edge of the associated door, is moulded onto the carrier (11).

11. Refrigerating or freezing appliance according to claim 3 or one of the following ones, characterised thereby, that a cover strip (14), gripping onto the outside edge of the associated door, is moulded onto the carriers (11).

12. Refrigerating or freezing appliance according to claim 1 or one of the following ones, characterised thereby, that the lip seal strip (8) is arranged at the longitudinal side of the one profile strip (4).

13. Refrigerating or freezing appliance according to claim 1 or one of the following ones, characterised thereby, that a sealing lip (10) engaging over the gap between the doors (2, 3) is arranged at the longitudinal side, neighbouring the outside of the door, of the profile strips (5) arranged at the outside.

## Revendications

1. Appareil réfrigérateur ou congélateur comportant au moins deux portes (2, 3) disposées l'une à côté de l'autre et un joint d'étanchéité prévu dans la fente délimitée par les surfaces latérales en regard des portes et qui est constitué par des barrettes profilées (4, 5) dont chacune est reliée à l'une des surfaces latérales de façon à assurer l'étanchéité en s'appliquant l'une contre l'autre, caractérisé en ce que les barrettes profilées (4, 5) sont disposées l'une à côté de l'autre dans le sens longitudinal et présentent au moins un compartiment qui s'étend dans le sens longitudinal des surfaces latérales et dont la hauteur est inférieure à la largeur de l'intervalle et en ce qu'une lèvre d'étanchéité longitudinale (8) est prévue entre les côtés longitudinaux voisins des barrettes profilées (4, 5).

2. Appareil réfrigérateur ou congélateur suivant la revendication 1, caractérisé en ce qu'une lèvre d'étanchéité (9) s'engageant au-dessus de l'intervalle entre les portes (2, 3) est prévue sur la barrette profilée (4) voisine du côté intérieur de la porte.

3. Appareil réfrigérateur ou congélateur suivant l'une des revendications 1 ou 2, caractérisé en ce que chacune des barrettes profilées (4, 5) présente un support (11) en matière indéformable qui épouse la surface frontale et sur lequel sont réalisées les barrettes profilées en matière déformable élastiquement.

4. Appareil réfrigérateur ou congélateur suivant la revendication 3, caractérisé en ce que le support (11) et la barrette profilée (4, 5) sont reliés l'un à l'autre pour former une seule pièce.

5. Appareil réfrigérateur ou congélateur suivant l'une des revendications 1 à 4, caractérisé en ce que chacune des barrettes profilées (4, 5) s'étend sensiblement sur la moitié de la profondeur de l'intervalle.

6. Appareil réfrigérateur ou congélateur suivant l'une des revendications 1 à 5, caractérisé en ce que les barrettes profilées (4, 5) sont subdivisées par au moins une paroi de séparation (6).

7. Appareil réfrigérateur ou congélateur suivant l'une des revendications 3 à 6, caractérisé en ce que le support (11) comporte une barrette de retenue (12) qui s'applique sur le bord intérieur (13), coudé à angle droit par rapport à la surface frontale, de la coquille extérieure de la porte (2, 3).

8. Appareil réfrigérateur ou congélateur suivant la revendication 7, caractérisé en ce que l'extrémité libre de la barrette de retenue (12) est coudée et s'engage par liaison de formes derrière l'arête du bord (13).

9. Appareil réfrigérateur ou congélateur suivant l'une des revendications 1 à 8, caractérisé en ce que les extrémités des compartiments des barrettes profilées sont obturées par un bouchon (18) adapté à la section transversale des compartiments.

10. Appareil réfrigérateur ou congélateur suivant l'une des revendications 3 à 9, caractérisé en ce qu'une lèvre d'étanchéité élastique (15), s'appliquant avec une précontrainte mécanique sur le bord intérieur associé de la porte, est prévue sur le support (11).

11. Appareil réfrigérateur ou congélateur suivant l'une des revendications 3 à 10, caractérisé en ce qu'une barrette de recouvrement (14), épousant le bord extérieur associé de la porte, est prévue sur le support (11).

12. Appareil réfrigérateur ou congélateur suivant l'une des revendications 1 à 11, caractérisé en ce que la lèvre d'étanchéité (8) est prévue sur le côté longitudinal de l'une des barrettes profilées (4).

13. Appareil réfrigérateur ou congélateur suivant l'une des revendications 1 à 12, caractérisé en ce qu'une lèvre d'étanchéité (10) s'engageant au-dessus de l'intervalle entre les portes (2, 3) est prévue sur le côté longitudinal à proximité du côté extérieur de la porte des barrettes profilées (5) disposées extérieurement.

FIG. 1

FIG. 2